# DEMANDE DE BREVET EUROPEEN

(11) **EP 3 745 230 A1**
(43) Date de publication de la demande: **02.12.2020**
(21) Numéro de dépôt: 20176925.4
(22) Date de dépôt: 27.05.2020
(51) Int. Cl.: G05B 23/02

(54) **PROCÉDÉ ET SYSTÈME DE SURVEILLANCE ET DE COMMANDE D'ÉQUIPEMENTS INDUSTRIELS**

(30) Priorité: 29.05.2019 FR 1905697
(71) Demandeur: Lacroix Sofrel, 35770 Vern Sur Seiche (FR)
(72) Inventeur: ROUAULT, Gilles, Yves, André, 35310 BREAL SOUS MONTFORT (FR); BOUFFARD, Michel, 35510 Cesson Sevigne (FR)
(74) Mandataire: Lavoix

(57) **Abrégé**

L'invention concerne un procédé et un système de surveillance et de commande d'équipements industriels, comportant la détermination d'un ensemble d'indicateurs de fonctionnement des équipements industriels, et pour chaque indicateur, la détermination d'une ou plusieurs grandeurs physiques mesurées pour calculer ledit indicateur, puis l'obtention d'une sélection par un opérateur d'un sous-ensemble d'indicateurs de fonctionnement des équipements industriels formant un contexte d'analyse fonctionnelle desdits équipements industriels. Après calcul des valeurs des indicateurs de fonctionnement dudit sous-ensemble, une vue cartographique (92) d'objets graphiques (94, 96) représentatifs d'équipements industriels associés audit sous-ensemble d'indicateurs de fonctionnement est affichée, chaque objet graphique (94, 96) étant affiché à une position spatiale correspondant à au moins un équipement industriel surveillé, chaque objet graphique (94, 96) représenté étant sélectionnable par un opérateur, la sélection d'un objet graphique (94, 96) ayant pour effet d'afficher un complément d'information (98) relatif audit ensemble d'indicateurs de fonctionnement pour l'équipement industriel associé et/ou d'afficher un menu de commande (100) de l'équipement industriel associé.

## Description

La présente invention concerne un procédé et un système de surveillance et de commande d'équipements industriels, répartis sur un territoire géographique, au moins une partie des équipements industriels étant apte à mesurer ou piloter des grandeurs physiques.

L'invention se situe dans le domaine de la commande et de la surveillance des équipements industriels.

Elle trouve une application particulière dans le domaine des équipements industriels faisant partie des réseaux de distribution d'eau ou d'énergie.

En effet, un réseau de distribution d'eau ou d'énergie comporte un nombre assez important d'équipements industriels, par exemple des vannes, des capteurs, des actionneurs d'installations techniques, qui sont répartis sur divers sites d'un territoire géographique de taille variable. Des opérateurs spécialisés, également appelés spécialistes métier, sont amenés à intervenir pour l'installation et la maintenance de tels réseaux.

De plus, de tels réseaux sont exploités, localement, par d'autres opérateurs, par exemple des collectivités territoriales, qui sont des utilisateurs non spécialistes du métier.

Il se pose alors un problème de communication des informations aux exploitants non spécialistes du métier. Le coût de commande et de surveillance d'un tel réseau est augmenté s'il est nécessaire de faire intervenir des spécialistes métier pour toute action.

Afin de faciliter la commande et la surveillance des équipements industriels, ou télégestion des équipements industriels, en particulier dans le cadre des réseaux précités, pour détecter d'éventuels dysfonctionnements ou besoins de maintenance, il est connu d'utiliser des moyens de communication pour obtenir des données de fonctionnement des équipements industriels et de présenter ces données de fonctionnement, en utilisant un logiciel dédié, à des opérateurs distants.

De manière classique, ces logiciels utilisent des boîtes à outils très sophistiquées, destinées à des spécialistes métier pour une application bien précise, et nécessitent des modifications pour toute évolution dans les spécifications des équipements industriels surveillés.

Il existe également des applications utilisant SCADA (« Supervisory Control and Data Acquisition »), qui est un système de télégestion à grande échelle permettant de gérer, en temps réel, des télémesures issues d'équipements industriels. Les systèmes SCADA sont généralistes, basés sur des informations unitaires banalisées. Pour intégrer les contraintes spécifiques « métier » des équipements à surveiller, des développements informatiques supplémentaires sont nécessaires.

Dans ces cas classiques, les coûts de développements informatiques dédiés s'ajoutent aux coûts de surveillance et de maintenance des équipements industriels, et des développements supplémentaires sont nécessaires pour toute évolution des spécifications des équipements industriels. De plus, les logiciels existants sont dédiés à des spécialistes métier qui sont capables d'interpréter les données de fonctionnement obtenues.

L'invention a pour but de remédier aux inconvénients de l'état de la technique.

A cet effet, l'invention concerne un procédé de surveillance et de commande d'équipements industriels, répartis sur un territoire géographique, au moins une partie des équipements industriels étant apte à mesurer ou piloter des grandeurs physiques, sur commande ou à des instants temporels prédéterminés, et à transmettre par des moyens de communication au moins une valeur de mesure des grandeurs physiques à un système de surveillance et de commande comportant au moins un ordinateur. Le procédé est mis en oeuvre par le système de surveillance et de commande et comporte :
- une détermination d'un ensemble d'indicateurs de fonctionnement des équipements industriels, et pour chaque indicateur de fonctionnement, détermination d'une ou plusieurs grandeurs physiques mesurées pour calculer ledit indicateur,
- une obtention d'une sélection par un opérateur d'un sous-ensemble d'indicateurs de fonctionnement des équipements industriels formant un contexte d'analyse fonctionnelle desdits équipements industriels, et pour chaque indicateur de fonctionnement, un calcul d'une valeur dudit indicateur de fonctionnement à partir des grandeurs physiques mesurées reçues des équipements industriels,
- un affichage sur un écran d'une vue cartographique d'objets graphiques représentatifs des seuls équipements industriels associés audit sous-ensemble d'indicateurs de fonctionnement sélectionné, chaque objet graphique étant affiché à une position spatiale correspondant à au moins un équipement industriel surveillé, chaque objet graphique représenté étant sélectionnable par un opérateur,
- la sélection d'un objet graphique ayant pour effet d'afficher un complément d'information relatif audit ensemble d'indicateurs de fonctionnement pour l'équipement industriel associé et d'afficher un menu de commande de l'équipement industriel associé.

Avantageusement, le procédé de l'invention permet d'effectuer la surveillance et la commande d'équipements industriels, à partir d'une interface ergonomique pour un opérateur qui ne doit pas être un spécialiste métier des équipements industriels surveillés.

Le procédé de surveillance et de commande d'équipements industriels selon l'invention peut présenter une ou plusieurs des caractéristiques ci-dessous, prises indépendamment ou selon toutes les combinaisons acceptables.

Le procédé comporte en outre, pour chaque sous-ensemble d'indicateurs de fonctionnement, une détermination de valeurs seuil pour au moins un indicateur de fonctionnement, et un affichage différencié selon une comparaison d'une valeur d'indicateur de fonctionnement par rapport aux valeurs seuil, de manière à mettre en exergue une anomalie ou un dysfonctionnement d'équipements dans ledit contexte d'analyse fonctionnelle.

L'affichage différencié comprend un affichage avec une caractéristique visuelle différente selon la comparaison de ladite valeur d'indicateur de fonctionnement à au moins une valeur seuil.

La caractéristique visuelle d'affichage est une caractéristique de couleur et/ou de brillance et/ou de clignotement.

La détermination de valeurs seuil pour un indicateur donné comporte la détermination d'une valeur seuil minimale de bon fonctionnement et/ou la détermination d'une valeur seuil maximale de bon fonctionnement, une valeur d'indicateur inférieure à la valeur seuil minimale ou supérieure à la valeur seuil maximale indiquant une anomalie de fonctionnement d'au moins un équipement associé audit indicateur.

Le procédé comporte en outre, en cas de détection d'anomalie de fonctionnement, une levée d'alerte à destination de l'opérateur.

Le procédé comporte en outre, en cas de détection d'anomalie de fonctionnement, un affichage de menu de commande relative au contexte d'analyse fonctionnelle, adapté à piloter au moins une action à effectuer pour remédier à l'anomalie de fonctionnement détectée.

Le procédé comporte en outre une acquisition d'informations complémentaires relatives au fonctionnement des équipements industriels surveillés à partir de bases de données ou de systèmes informatiques de calcul et d'analyse distants, et un affichage d'au moins une partie desdites informations complémentaires.

Les informations complémentaires comportent des données d'analyses statistiques, des fiches techniques produit, aide en ligne. Selon un autre aspect, l'invention concerne un système de surveillance et de commande d'équipements industriels, répartis sur un territoire géographique, au moins une partie des équipements industriels étant apte à mesurer ou piloter des grandeurs physiques, sur commande ou à des instants temporels prédéterminés, le système comportant au moins un système informatique adapté à communiquer avec lesdits équipements et à recevoir des valeurs de mesure des grandeurs physiques, et un terminal d'opérateur adapté à communiquer avec ledit système informatique. Ce système de surveillance et de commande comporte au moins un processeur de calcul configuré pour mettre en œuvre des modules de :
- détermination d'un ensemble d'indicateurs de fonctionnement des équipements industriels, et pour chaque indicateur de fonctionnement, détermination d'une ou plusieurs grandeurs physiques mesurées pour calculer ledit indicateur,
- obtention d'une sélection par un opérateur d'un sous-ensemble d'indicateurs de fonctionnement des équipements industriels formant un contexte d'analyse fonctionnelle desdits équipements industriels, et pour chaque indicateur de fonctionnement, un calcul d'une valeur dudit indicateur de fonctionnement à partir des grandeurs physiques mesurées reçues des équipements industriels,
- affichage sur un écran du terminal d'opérateur d'une vue cartographique d'objets graphiques représentatifs des seuls équipements industriels associés audit sous-ensemble d'indicateurs de fonctionnement sélectionné, chaque objet graphique étant affiché à une position spatiale correspondant à au moins un équipement industriel surveillé, chaque objet graphique représenté étant sélectionnable par un opérateur, la sélection d'un objet graphique ayant pour effet d'afficher un complément d'information relatif audit ensemble d'indicateurs de fonctionnement pour l'équipement industriel associé et d'afficher un menu de commande de l'équipement industriel associé.

Le système de commande comporte des moyens de calcul et des moyens de communication adaptés à mettre en oeuvre le procédé de surveillance et de commande d'équipements industriels tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre schématiquement un système de surveillance et de commande d'équipements industriels selon un mode de réalisation ;
[Fig 2] la figure 2 est un synoptique d'un mode de réalisation d'un procédé de surveillance et de commande d'équipements industriels selon l'invention ;
[Fig 3] la figure 3 est un exemple schématique d'interface graphique pour un opérateur de surveillance et de commande dans un scénario d'application d'un procédé selon l'invention.

L'invention sera décrite ci-après plus particulièrement dans son application à la surveillance et à la commande d'équipements industriels faisant partie de réseaux de distribution d'eau ou d'énergie.

Les exemples donnés ci-après sont non limitatifs, l'invention s'appliquant plus généralement à la surveillance et à la commande d'équipements industriels répartis géographiquement sur un territoire, dans tout type d'application.

Par exemple, les équipements industriels considérés sont répartis sur une pluralité de sites géographiques. Pour au moins certains des sites, plusieurs équipements industriels forment des installations multi-instruments.

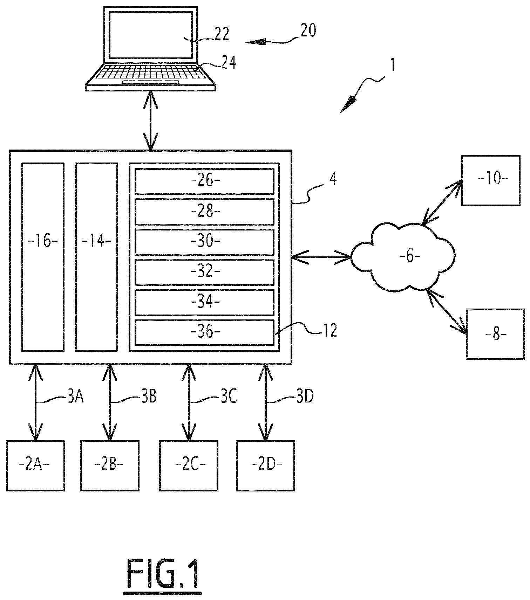

La figure 1 illustre schématiquement un système 1 de surveillance et de commande d'équipements industriels 2A, 2B, 2C, 2D, répartis sur un territoire géographique. Un faible nombre d'équipements industriels est schématiquement représenté sur la figure, en pratique un nombre quelconque d'équipements industriels est pris en considération.

Les équipements industriels 2A à 2D font partie d'une installation, par exemple un réseau de distribution d'eau ou de distribution d'énergie électrique non représenté.

Dans un mode de réalisation, au moins certains des équipements 2A, 2B, 2C, 2D sont adaptés à effectuer des mesures de grandeurs physiques, sur commande ou à des intervalles temporels prédéterminés, et à transmettre des valeurs mesurées à un système informatique sur des liaisons de communications respectives 3A, 3B, 3C, 3D.

La transmission de données se fait par exemple par une liaison de communication sans fil, par exemple selon la technologie de télécommunications sans fil 2G, 3G ou 4G. A cet effet, chaque équipement industriel est équipé d'un module de communication sans fil adapté à la technologie de communication sans fil utilisée.

En variante, la transmission de données se fait par une liaison de communication filaire, selon un protocole de communication prédéterminé.

Les équipements industriels sont par exemple des capteurs, des actionneurs.

Par exemple, dans le cas d'application d'une surveillance de réseau de distribution d'eau, les équipements industriels sont par exemple des enregistreurs de données (ou Data Loggers en anglais) ou des automates industriels.

Par exemple, dans un mode de réalisation, au moins certains des équipements industriels surveillés sont des équipements équipés de plusieurs capteurs et pouvant fournir plusieurs mesures de grandeurs physiques, par exemple des mesures de température externe/interne, de pression d'entrée et de sortie, de débit d'eau amont et aval.

Au moins certains des équipements industriels 2A, 2B, 2C, 2D sont aptes à recevoir des ordres de fonctionnement d'un système informatique 4, par exemple via les liaisons de communications 3A, 3B, 3C, 3D.

Par exemple, si un des équipements industriels est une vanne, une commande d'ouverture ou de fermeture de la vanne est reçue via la liaison de communication correspondante, et mise en oeuvre par l'équipement. Ainsi, il est possible de commander une grandeur physique associé à l'équipement, par exemple une régulation (augmentation / diminution) d'une pression ou d'un débit d'eau.

Le système informatique 4 est par exemple un serveur centralisé, connecté à un réseau de communication 6, par exemple le réseau Internet. Ce système informatique 4 est alors adapté à communiquer avec des systèmes informatiques 8, 10 distants, également connectés au réseau de communication 6.

Par exemple, un des systèmes informatiques 8, 10 héberge une base de données d'informations relatives à des équipements industriels 2A à 2D, mémorisées par exemple par catégories d'équipements industriels. Par exemple, ces informations contiennent des spécifications, des informations de plages de fonctionnement, des instructions d'installation ou de maintenance.

Le système informatique 4 comprend ou est connecté à une mémoire électronique 12, et comprend un processeur de calcul 14 configuré pour mettre en œuvre un procédé de surveillance et de commande d'équipements industriels forme de logiciel exécutable. Le système informatique 4 comprend également un module de communication 16, adapté à communiquer d'une part avec un terminal d'opérateur 20, et d'autre part avec des équipements industriels 2A à 2D précédemment décrits.

Le système comporte également un terminal d'opérateur 20, comportant une interface d'affichage 22, ou écran d'affichage, et une interface de saisie de commandes 24, formant une interface homme-machine.

Dans un mode de réalisation alternatif, l'interface d'affichage 22 et l'interface de saisie de commandes 24 sont réunies en une seule interface homme-machine formée par un écran tactile, sur lequel l'opérateur peut directement agir via un dispositif de pointage ou une pression, par exemple au moyen d'un ou plusieurs doigts.

Le terminal d'opérateur 20 est par exemple un ordinateur, une tablette électronique, ou tout autre dispositif électronique comportant une unité centrale de calcul (CPU) adaptée à effectuer des calculs et à implémenter des instructions de code de programme informatique, et une unité de communication adaptée à communiquer avec un système informatique 4 distant par un protocole de communication, selon un mode de communication client/server, le terminal d'opérateur étant un client du système informatique 4.

Plusieurs modules, par exemple réalisés sous formes de briques logicielles exécutables par le processeur 14, sont mémorisés dans l'unité de mémoire 12, configurés pour mettre en œuvre un procédé de surveillance et de commande d'équipements industriels selon l'invention.

Ces modules comportent :
- un module 26 de détermination d'un ensemble d'indicateurs de fonctionnement des équipements industriels à surveiller et à commander, et de réception de commandes d'opérateur de sélection d'indicateurs de fonctionnement ;
- un module 28 de calcul de valeurs d'indicateurs de fonctionnement en fonction de grandeurs physiques mesurées reçues des équipements industriels via les liaisons de communication 3A à 3D ;
- un module 30 de commande d'affichage sur l'interface d'affichage 22 du terminal d'opérateur d'une vue cartographique d'objets graphiques représentatifs d'équipements industriels, chaque objet graphique représenté étant sélectionnable par l'opérateur, et optionnellement, d'affichage de compléments d'informations relatifs aux équipements industriels ;
- un module 32 de réception de commande de filtrage/sélection d'indicateurs de fonctionnement par l'opérateur ;
- un module 34 de détermination de valeurs seuil pour au moins un indicateur,
- un module 36 de commande d'équipements industriels.

Avantageusement, les indicateurs de fonctionnement sont choisis et définis par un opérateur, chaque indicateur de fonctionnement ayant une définition sémantique fonctionnelle compréhensible par un opérateur qui n'est pas spécialiste du domaine technique de l'installation à surveiller et à commander.

Avantageusement, les affichages fournis sur l'interface d'affichage du terminal d'opérateur sont paramétrables par l'opérateur pour obtenir des informations pertinentes dans un contexte d'analyse fonctionnelle donné, pour un sous-ensemble fonctionnellement cohérent d'équipements industriels.

On appelle contexte d'analyse fonctionnelle un ensemble d'indicateurs de fonctionnement, collectivement cohérents et pertinents pour représenter un phénomène surveillé ou piloté par un ou plusieurs équipements industriels.

On appelle sous-ensemble fonctionnellement cohérent un sous-ensemble choisi sur des critères fonctionnels, par exemple : secteur géographique, typologie d'installation technique, domaine d'activités (par exemple, eau potable ou eaux usées dans le cas des réseaux de distribution d'eau). Ainsi, un sous-ensemble fonctionnellement cohérent permet la réalisation d'une analyse métier, paramétrée directement par un opérateur, relative aux équipements industriels surveillés.

L'invention fournit une interface homme-machine d'affichage et de commande qui est ergonomique, et qui permet à un opérateur non spécialiste du domaine technique de surveiller divers équipements industriels en fonctionnement, de détecter facilement des cas de dysfonctionnement, ou plus généralement de sortie des plages de fonctionnement nominal (e.g. des anomalies). Dans ce cas, le système permet de commander, automatiquement ou sur ordre de l'opérateur, un ou plusieurs équipements industriels, par exemple pour rétablir un fonctionnement nominal.

Le nombre de cas de figure où un appel à un opérateur spécialiste du domaine technique (spécialiste métier) est nécessaire est largement diminué, ce qui permet de faciliter la surveillance et la commande d'équipements industriels et de diminuer les coûts de surveillance et de commande.

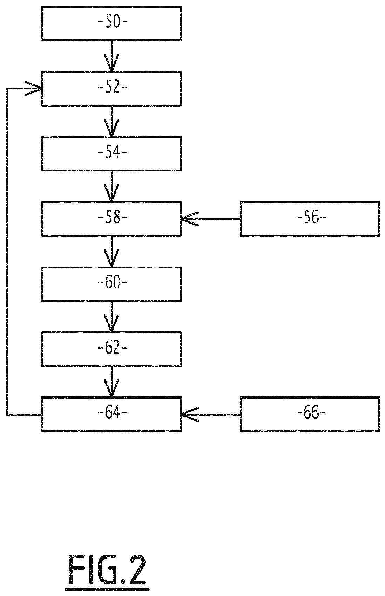

La figure 2 est un synoptique d'un mode de réalisation d'un procédé de surveillance et de commande d'équipements industriels selon l'invention.

Le procédé est mis en œuvre dans un cas d'application donné, par exemple la surveillance et la commande d'équipements d'un réseau de distribution d'eau.

Dans le mode de réalisation décrit, le procédé comprend une étape 50 de détermination d'un ensemble d'indicateurs de fonctionnement des équipements industriels, et pour chaque indicateur de fonctionnement, en lien avec les équipements industriels surveillés, détermination d'une ou plusieurs grandeurs physiques mesurées pour calculer cet indicateur.

Les indicateurs sont choisis en fonction de l'application et des équipements industriels à surveiller/commander.

De préférence, les indicateurs de fonctionnement sont liés à une sémantique fonctionnelle, dans un contexte d'analyse fonctionnelle.

En effet, les équipements industriels manipulent des données numériques ou logiques sans signification 'humaine'.

Les indicateurs de fonctionnement fournissent une sémantique d'interprétation fonctionnelle de ces données, permettant ainsi de manipuler des grandeurs identifiées (pression aval / amont d'une installation, ouverture / fermeture d'une vanne, volume d'eau produit / consommé, ...) et de comparer ces grandeurs entre plusieurs installations ou par rapport à des valeurs nominales.

Le contexte d'analyse fonctionnelle permet de définir, analyser ou comparer simultanément plusieurs indicateurs par rapport à une stratégie ou une interprétation nominale.

L'étape 50 est une étape de paramétrage, mise en œuvre lors de l'installation du logiciel mettant en œuvre le procédé de l'invention.

Le nombre d'indicateurs de fonctionnement choisi est suffisant pour décrire les équipements industriels de l'installation ou des installations considérée(s), et pour détecter des cas d'anomalie ou de dysfonctionnement.

Néanmoins, l'étape 50 peut être itérée dès lors que de nouveaux équipements industriels avec des spécifications différentes sont ajoutés dans l'installation. Avantageusement, une mise à jour dynamique des indicateurs de fonctionnement est donc possible.

En fonctionnement, un opérateur a accès, via un terminal d'opérateur, à une interface homme-machine présentant diverses options permettant d'effectuer la surveillance et la commande des équipements industriels de l'installation.

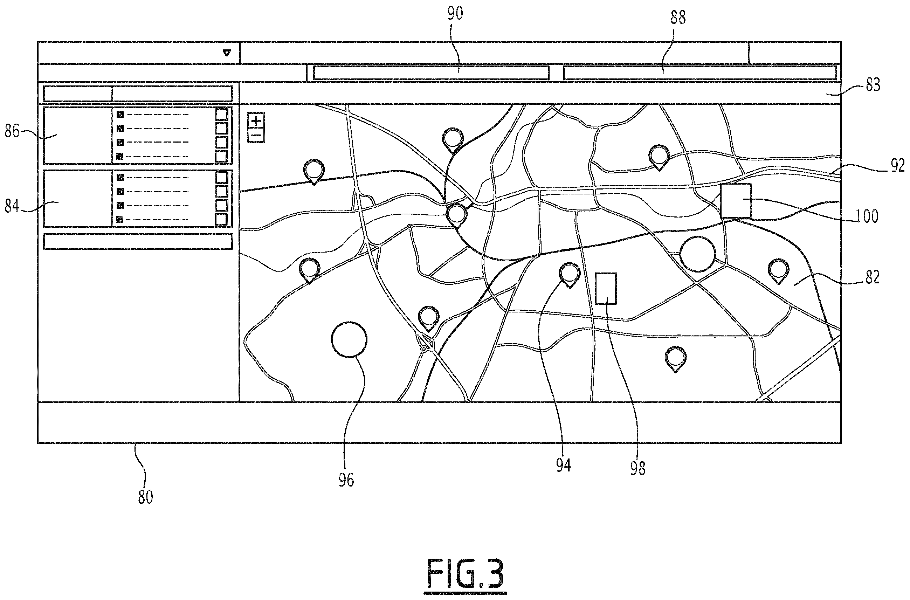

Lors d'une étape 52 l'opérateur sélectionne au moins un sous-ensemble des indicateurs de fonctionnement disponible, pour lesquels il souhaite effectuer la surveillance. Par exemple, la sélection est effectuée par des commandes via une interface graphique dont un exemple sera détaillé ci-après à la figure 3.

Dans le cas général, le sous-ensemble des indicateurs de fonctionnement comporte un nombre d'indicateurs de fonctionnement inférieur au nombre total d'indicateurs de fonctionnement définis.

De préférence, le sous-ensemble d'indicateurs est fonctionnellement cohérent et permet de réaliser une analyse fonctionnelle ou analyse métier.

Selon les cas de figure, le sous-ensemble d'indicateurs de fonctionnement peut être, dans un premier cas d'application, limité à un seul indicateur de fonctionnement, ou, dans un deuxième cas d'application égal à l'ensemble complet des indicateurs de fonctionnement.

Les valeurs des indicateurs de fonctionnement sélectionnées sont calculées en fonction des mesures de grandeurs physiques obtenues des équipements industriels à surveiller lors d'une étape suivante 54.

Les valeurs calculées sont comparées, lors d'une étape 58 de détermination de valeurs seuil et de comparaison, à des valeurs seuil minimale et/ou maximale préalablement obtenues et mémorisées lors d'une étape 56. Les valeurs seuil sont des valeurs d'indicateurs de fonctionnement définissant un fonctionnement nominal.

Par exemple, les valeurs seuils sont obtenues à partir de bases de données externes ou dynamiquement mises à jour, par exemple suite à des phases de test des équipements industriels.

En variante, les valeurs seuil minimales et maximales sont mémorisées par le système informatique 4.

Si une valeur d'indicateur de fonctionnement est inférieure à une valeur seuil minimale ou supérieure à une valeur seuil maximale, une alerte d'anomalie, ou de possible dysfonctionnement est levée (étape 60).

De plus, un affichage 62 différencié est effectué en fonction des valeurs d'indicateurs de fonctionnement calculées.

En variante, les étapes 60 et 62 sont fusionnées, l'affichage 62 servant d'alerte d'éventuel dysfonctionnement, par exemple par la mise en œuvre d'un affichage particulier (e.g. clignotement, surbrillance) pour mettre en exergue un dysfonctionnement constaté.

A l'étape 62, une vue cartographique d'objets graphiques représentatifs des équipements industriels caractérisés par des indicateurs de fonctionnement du sous-ensemble d'indicateurs sélectionné à l'étape 52 est affichée.

Il est entendu par vue cartographique un positionnement localisé sur une cartographie, par exemple un plan, la position spatiale d'affichage de chaque objet graphique représentatif d'un équipement industriel étant calculée en fonction de coordonnées de géolocalisation dans un référentiel de géolocalisation (par exemple des coordonnées GPS) de l'équipement industriel.

Par exemple, les objets graphiques sont représentés par des symboles graphiques choisis, en superposition d'une carte de terrain schématisée, par exemple un plan d'agglomération urbaine.

Selon une variante, un objet graphique représente plusieurs équipements industriels, selon un paramétrage effectué. Par exemple, lorsqu'un indicateur de fonctionnement intègre des mesures physiques issues de plusieurs équipements, comme la pression amont mesurée par un premier équipement et la pression aval mesurée par un deuxième équipement industriel.

Par exemple, dans le cas d'un réseau de distribution d'eau, si l'opérateur a choisi le contexte d'analyse fonctionnelle « pression », des indicateurs de pression d'entrée en amont d'une installation comportant un ou plusieurs équipements situés dans une zone géographique délimitée, de pression en sortie et/ou de surpression sont affichés, en lien avec les équipements industriels concernés.

Pour les mêmes installations du réseau de distribution d'eau, l'opérateur a par exemple la possibilité de choisir un contexte d'analyse fonctionnelle relatif au volume d'eau distribué / perdu, auquel cas des indicateurs de fonctionnement de volume d'entrée et de sortie sont calculés, et l'affichage est effectué en lien avec les indicateurs de fonctionnement calculés. De plus, des indicateurs de fonctionnement relatifs à l'état des équipements industriels en lien avec le contexte d'analyse fonctionnelle sont affichés, par exemple l'état « ouvert » ou « fermé » de vannes faisant partie des équipements industriels surveillés, afin de permettre à l'opérateur de commander ces vannes pour agir sur le volume d'eau distribué.

En d'autres termes, un filtrage d'affichage est effectué en fonction du contexte d'analyse fonctionnelle : seuls sont affichés les objets graphiques associés à des équipements industriels en lien avec le sous-ensemble d'indicateurs de fonctionnement sélectionné par l'opérateur.

De préférence, l'affichage est modifié en fonction des valeurs d'indicateurs de fonctionnement calculées : par exemple, la couleur d'affichage d'un objet graphique représentatif d'un équipement industriel est différente selon la valeur de l'indicateur de fonctionnement associée, par exemple elle est rouge si en cas d'alerte de dysfonctionnement ou d'anomalie ou verte en cas de valeur de l'indicateur de fonctionnement comprise dans une plage de fonctionnement nominal.

De plus, optionnellement, des informations complémentaires comportant des données d'analyses statistiques et/ou des fiches techniques produit et/ou une aide en ligne pour la maintenance d'un équipement industriel sont proposées à l'opérateur via des boutons sélectionnables.

De plus, un menu de commande d'équipements industriels est affiché en lien avec chaque équipement industriel (étape 64) pilotable à distance, permettant à l'opérateur de sélectionner et valider une commande (étape de commande 66) directement à partir de l'interface d'affichage.

De préférence, le menu de commande présente des commandes relatives au contexte d'analyse fonctionnelle choisi et aux indicateurs de fonctionnement calculés, pilotant des actions à effectuer pour remédier aux anomalies/dysfonctionnements constatés.

Par exemple, dans un contexte d'analyse fonctionnelle relatif au stockage de l'eau dans des installations de type château d'eau, un indicateur de fonctionnement est le niveau d'eau dans un château d'eau, qui est comparé à un seuil de remplissage minimal. Une commande de déclenchement du remplissage est fournie. Dans un mode de réalisation, l'opérateur pilote le déclenchement du remplissage si le niveau d'eau mesuré tombe en dessous du seuil de remplissage minimal. En variante, le système déclenche automatiquement le remplissage dans ce cas de figure.

Par conséquent, l'analyse du contexte permet soit à un opérateur par consultation d'un affichage, soit automatiquement au système de déclencher une action corrective par rapport à une anomalie constatée.

L'affichage est rafraîchi en temps réel, soit à une fréquence temporelle prédéterminée soit sur commande de l'opérateur, les valeurs d'indicateur de fonctionnement étant mises à jour.

L'affichage de la cartographie est persistant, pour réaliser une surveillance des équipements industriels de l'installation.

Les étapes 52 à 64 sont itérées suite aux commandes d'un opérateur.

Avantageusement, l'opérateur a la possibilité de paramétrer facilement et dynamiquement le système de surveillance et de commande, et de détecter en temps réel d'éventuelles anomalies ou dysfonctionnements, sur la base d'indicateurs de fonctionnement ayant un contenu sémantique compréhensible, dans un contexte d'analyse fonctionnelle choisi.

La figure 3 illustre schématiquement une vue d'une interface graphique affichée sur un écran d'affichage d'un terminal d'opérateur dans un mode de réalisation de l'invention.

L'interface graphique 80 comporte plusieurs portions d'affichage.

Par exemple, les tailles des portions d'affichage sont paramétrables par l'opérateur.

Par exemple, l'interface graphique comporte une portion d'affichage principale 82 et plusieurs portions d'affichage secondaires 84, 86, 88, 90.

Bien entendu, le nombre de portions d'affichage est donné ici uniquement à titre d'exemple, et peut être différent en fonction de l'application envisagée.

La portion d'affichage principale 82, qui occupe de préférence une surface d'affichage supérieure aux surfaces d'affichage occupées par les autres portions d'affichage 84, 86, 88, 90, est dédiée à l'affichage d'une cartographie 92.

D'autres portions d'affichage sont par exemple :
- des portions d'affichage 84, 86 permettant d'indiquer le ou les indicateurs de fonctionnement choisis, et un type d'affichage associé ;
- des portions d'affichage 88, 90 qui sont des onglets sélectionnables dans cet exemple, permettant de modifier l'affichage dans la portion d'affichage 82, par exemple : l'affichage d'alarmes en cours ou l'affichage de l'ensemble des indicateurs de fonctionnement relatifs à un contexte d'analyse fonctionnelle choisi, pour des équipements industriels de l'installation, ou des regroupements d'équipements industriels, par exemple des regroupements d'équipements industriels géographiquement proches, c'est-à-dire dont les positions spatiales de géolocalisation sont dans un périmètre prédéterminé.

La cartographie 92 est par exemple un plan, et plusieurs objets graphiques 94, 96 représentatifs des équipements industriels, filtrés selon un sous-ensemble d'indicateurs de fonctionnement choisis, sont affichés à des localisations spatiales correspondant aux positions de géolocalisation des équipements industriels associés.

Dans l'exemple illustré, la portion d'affichage principale comporte une barre de commande 83, permettant à l'opérateur d'effectuer des commandes sur l'affichage lui-même : rafraîchissement, changement de mode de visualisation, modification du niveau de zoom (zoom +/zoom -) par rapport à la cartographie affichée.

Ainsi, avantageusement, l'opérateur a une vision d'ensemble sur un territoire géographique donné.

Par exemple, les objets graphiques 94 correspondent à des localisations d'équipements industriels, et les objets graphiques 96 correspondent à des localisations de regroupements d'équipements industriels.

Les objets graphiques 96 sont par exemple utilisés lorsqu'un grand nombre d'équipements industriels est concentré dans une zone géographique, pour présenter l'ergonomie de l'interface.

Les objets graphiques 94, 96 sont affichés avec une caractéristique visuelle, e.g. couleur et/ou brillance et/ou clignotement, correspondant à l'état de criticité des indicateurs de fonctionnement surveillés dans le contexte d'analyse fonctionnelle choisi, pour indiquer un fonctionnement nominal dans les plages de fonctionnement nominales ou une présence d'anomalie ou de dysfonctionnement.

Pour les objets graphiques 96 correspondant à des regroupements de plusieurs équipements industriels, de préférence la caractéristique visuelle d'affichage correspond à l'état le plus critique parmi les équipements industriels regroupés. Par exemple, si un objet graphique 96 correspond à plusieurs équipements industriels et un des indicateurs de fonctionnement indique une surpression, l'objet graphique 96 est affiché avec la caractéristique visuelle correspondant à la surpression.

Bien entendu, il est possible de distinguer par des caractéristiques visuelles plusieurs niveaux de criticité des anomalies ou dysfonctionnements constatés.

Chaque objet graphique 94, 96 est sélectionnable, par exemple par un clic sur l'objet ou par une sélection directe par pression dans le cas d'un écran tactile, ce qui induit un affichage d'informations complémentaires 98, comprenant par exemple une ou plusieurs des informations suivantes :
- la ou les valeurs d'indicateurs de fonctionnement, mises à jour en temps réel ;
- les coordonnées dans un référentiel de géolocalisation (e.g. coordonnées GPS) de l'équipement industriel considéré ;
- des données d'analyses statistiques, des fiches techniques produit, aide en ligne.

Les données d'analyse statistique sont par exemple présentées sous forme de courbes ou de tableaux.

Un menu de commande 100 est affiché, ce menu permettant d'envoyer une commande à un ou à plusieurs équipements industriels commandables à distance.

De préférence, les commandes proposées dans un menu de commande 100 sont relatives au contexte d'analyse fonctionnelle choisi et aux indicateurs de fonctionnement calculés. Par exemple, dans un contexte d'analyse fonctionnelle de surveillance d'un volume d'eau distribué dans un réseau de distribution d'eau, des commandes d'ouverture /fermeture de vannes sont proposées.

Avantageusement, le filtrage d'affichage permet d'obtenir une vision cartographique d'ensemble selon les indicateurs de fonctionnement sélectionnés. L'ergonomie du système de surveillance est ainsi largement améliorée.

Avantageusement, l'invention permet d'obtenir des analyses métier cartographiques, définies par l'utilisateur lui-même, sans recours à un développement informatique spécifique, et facilement interprétables.

## Revendications

1. Procédé de surveillance et de commande d'équipements industriels (2A, 2B, 2C, 2D), répartis sur un territoire géographique, au moins une partie des équipements industriels étant apte à mesurer ou piloter des grandeurs physiques, sur commande ou à des instants temporels prédéterminés, et à transmettre par des moyens de communication au moins une valeur de mesure des grandeurs physiques à un système de surveillance et de commande comportant au moins un ordinateur, le procédé étant **caractérisé en ce qu'**il est mis en œuvre par le système de surveillance et de commande (1) et comporte :
- une détermination (50) d'un ensemble d'indicateurs de fonctionnement des équipements industriels, et pour chaque indicateur de fonctionnement, détermination d'une ou plusieurs grandeurs physiques mesurées pour calculer ledit indicateur,
- une obtention (52) d'une sélection par un opérateur d'un sous-ensemble d'indicateurs de fonctionnement des équipements industriels formant un contexte d'analyse fonctionnelle desdits équipements industriels, et pour chaque indicateur de fonctionnement, un calcul (54) d'une valeur dudit indicateur de fonctionnement à partir des grandeurs physiques mesurées reçues des équipements industriels,
- un affichage (62, 64) sur un écran d'une vue cartographique (92) d'objets graphiques (94, 96) représentatifs des seuls équipements industriels associés audit sous-ensemble d'indicateurs de fonctionnement sélectionné, chaque objet graphique (94, 96) étant affiché à une position spatiale correspondant à au moins un équipement industriel surveillé, chaque objet graphique (94, 96) représenté étant sélectionnable par un opérateur,
- la sélection d'un objet graphique (94, 96) ayant pour effet d'afficher un complément d'information (98) relatif audit ensemble d'indicateurs de fonctionnement pour l'équipement industriel associé et d'afficher un menu de commande (100) de l'équipement industriel associé.

2. Procédé selon la revendication 1, comportant en outre, pour chaque sous-ensemble d'indicateurs de fonctionnement, une détermination (56, 58) de valeurs seuil pour au moins un indicateur de fonctionnement, et un affichage (62) différencié selon une comparaison (58) d'une valeur d'indicateur de fonctionnement par rapport aux valeurs seuil, de manière à mettre en exergue une anomalie ou un dysfonctionnement d'équipements dans ledit contexte d'analyse fonctionnelle.

3. Procédé selon la revendication 2, dans lequel l'affichage (62) différencié comprend un affichage avec une caractéristique visuelle différente selon la comparaison de ladite valeur d'indicateur de fonctionnement à au moins une valeur seuil.

4. Procédé selon la revendication 3, dans lequel ladite caractéristique visuelle d'affichage est une caractéristique de couleur et/ou de brillance et/ou de clignotement.

5. Procédé selon l'une des revendications 2 à 4, dans lequel la détermination (56, 58) de valeurs seuil pour un indicateur donné comporte la détermination d'une valeur seuil minimale de bon fonctionnement et/ou la détermination d'une valeur seuil maximale de bon fonctionnement, une valeur d'indicateur inférieure à la valeur seuil minimale ou supérieure à la valeur seuil maximale indiquant une anomalie de fonctionnement d'au moins un équipement associé audit indicateur.

6. Procédé selon la revendication 5, comportant en outre, en cas de détection d'anomalie de fonctionnement, une levée d'alerte (60) à destination de l'opérateur.

7. Procédé selon l'une des revendications 4 à 6, comportant en outre, en cas de détection d'anomalie de fonctionnement, un affichage de menu de commande relative au contexte d'analyse fonctionnelle, adapté à piloter au moins une action à effectuer pour remédier à l'anomalie de fonctionnement détectée.

8. Procédé selon l'une quelconque des revendications 1 à 7, comportant en outre une acquisition d'informations complémentaires relatives au fonctionnement des équipements industriels surveillés à partir de bases de données ou de systèmes informatiques de calcul et d'analyse distants, et un affichage d'au moins une partie desdites informations complémentaires.

9. Procédé selon la revendication 8, dans lequel lesdites informations complémentaires comportent des données d'analyses statistiques, des fiches techniques produit, aide en ligne.

10. Système de surveillance et de commande d'équipements industriels (2A, 2B, 2C, 2D), répartis sur un territoire géographique, au moins une partie des équipements industriels étant apte à mesurer ou piloter des grandeurs physiques, sur commande ou à des instants temporels prédéterminés, le système comportant au moins un système informatique (4) adapté à communiquer avec lesdits équipements (2A, 2B, 2C, 2D) et à recevoir des valeurs de mesure des grandeurs physiques, et un terminal d'opérateur (20) adapté à communiquer avec ledit système informatique (4), le système de surveillance et de commande (1) étant **caractérisé en ce qu'**il comporte au moins un processeur de calcul (14) configuré pour mettre en œuvre des modules de :
- détermination (26) d'un ensemble d'indicateurs de fonctionnement des équipements industriels, et pour chaque indicateur de fonctionnement, détermination d'une ou plusieurs grandeurs physiques mesurées pour calculer ledit indicateur,
- obtention (32) d'une sélection par un opérateur d'un sous-ensemble d'indicateurs de fonctionnement des équipements industriels formant un contexte d'analyse fonctionnelle desdits équipements industriels, et pour chaque indicateur de fonctionnement, un calcul (28) d'une valeur dudit indicateur de fonctionnement à partir des grandeurs physiques mesurées reçues des équipements industriels,
- affichage (30) sur un écran (22) du terminal d'opérateur (20) d'une vue cartographique (92) d'objets graphiques (94, 96) représentatifs des seuls équipements industriels associés audit sous-ensemble d'indicateurs de fonctionnement sélectionné, chaque objet graphique (94, 96) étant affiché à une position spatiale correspondant à au moins un équipement industriel surveillé, chaque objet graphique (94, 96) représenté étant sélectionnable par un opérateur, la sélection d'un objet graphique (94, 96) ayant pour effet d'afficher un complément d'information (98) relatif audit ensemble d'indicateurs de fonctionnement pour l'équipement industriel associé et d'afficher un menu de commande (100) de l'équipement industriel associé.
